# EUROPÄISCHE PATENTSCHRIFT

(11) **EP 4 325 077 B1**
(45) Veröffentlichungstag und Bekanntmachung des Hinweises auf die Patenterteilung: **01.10.2025**
(21) Anmeldenummer: 23190462.4
(22) Anmeldetag: 09.08.2023
(51) Int. Cl.: F16D 3/46

(54) **KUGELGELENK**
BALL-JOINT
ARTICULATION À ROTULE

(30) Priorität: 17.08.2022 DE 102022120716
(43) Veröffentlichungstag der Anmeldung: 21.02.2024
(73) Patentinhaber: Elbe Holding GmbH & Co. KG, 74321 Bietigheim-Bissingen (DE)
(72) Erfinder: Herrmann, Stefan, 74321 Bietigheim-Bissingen (DE); Pika, Patryk, 74321 Bietigheim-Bissingen (DE)
(74) Vertreter: STT Sozietät Thews & Thews

(56) Entgegenhaltungen:
- EP-A1- 2 592 295
- DE-B- 1 206 669
- US-A- 1 443 930

## Beschreibung

Die Erfindung bezieht sich auf eine Gelenkkugel für ein Kugelgelenk einer Kugelgelenkwelle, wobei die Gelenkkugel eine äußere Kugeloberfläche sowie eine erste Nut und eine zweite Nut zur Aufnahme von jeweils einer separaten Gelenknabe aufweist und beide Nuten um einen Winkel α zueinander angestellt und zumindest teilweise um die Gelenkkugel umlaufend angeordnet sind.

Es sind bereits Kugelgelenke mit Gelenkkugeln für eine Kugelgelenkwelle bekannt. Solche Kugelgelenkwellen werden ähnlich wie Kardanwellen eingesetzt, um nicht fluchtende Zapfen miteinander zur Übertragung eines Drehmoments zu koppeln. Zur Gewährleistung eines störungsfreien Betriebs der Kugelgelenke ist eine manuelle oder automatische Tropfenschmierung von außen oder eine konstante Schmierung mit Schmierfett notwendig. Die konstante Schmierung wird durch eine Schutzhülle wie beispielsweise in Form eines Faltenbalgs erreicht, welcher das Kugelgelenk umgibt und bei der Herstellung des Kugelgelenks einmalig mit Fett gefüllt wird. Bei der Tropfenschmierung sind kurze Schmierintervalle notwendig. Im Dauerbetrieb mindestens einmal täglich. Nach der DE 228 747 A ist ein Bremsgestänge mit einem Kugelgelenk als Verbindung zwischen einem Hebel und einem Arm beschrieben. Dieses als Kreuzgelenk ausgebildete Kugelgelenk weist eine Kugel mit zwei sich senkrecht schneidenden Ringnuten auf. Die US 1 443 930 A1 beschreibt ein System, nach dem zusätzlich zu der Gelenkkugel Führungen vorgesehen sind, die eine Nut für die Gelenkgabel bilden. Die Führungen sind auf der Gelenkkugel umlaufend aufgebracht. Nach der DE 1 206 669 B und der EP 2 592 295 A1 sind Gelenkkugeln bekannt, die Nuten aufweisen, wobei auf dem Nutgrund Vertiefungen als Reservoir für Schmiermittel vorgesehen sind.

Der Erfindung liegt die Aufgabe zugrunde, ein Kugelgelenk derart auszubilden und anzuordnen, dass der Verschleiß und gleichzeitig die Schmierintervalle reduziert werden.

Gelöst wird die Aufgabe erfindungsgemäß dadurch, dass in der Gelenkkugel ein Kanalsystem mit mehreren Kanälen für Schmiermittel angeordnet ist und das Kanalsystem die Kugeloberfläche mit der Nut verbindet.

Hierdurch wird erreicht, dass Schmiermittel in Form von Schmierfett von außen an der Gelenkkugel direkt und gezielt nach innen an den Gleitflächen des Kugelgelenks eingebracht werden kann, wodurch aufgrund der direkten Schmierung in der Nut der Verschleiß gemindert wird. Dies gilt insbesondere für die Nachschmierung in gewissen Schmierintervallen, weil dazu nicht die Demontage der Kugelgelenkwelle und des Faltenbalgs notwendig ist.

Entsprechend kann durch die Kanäle mit Fett geschmiert werden, ohne einen Faltenbalg verwenden zu müssen. Der Faltenbalg wird beim Drehen der Kugelgelenkwelle ständig verformt, weshalb sich nach einer gewissen Betriebsdauer Risse im Faltenbalg einstellen. Ohne einen Faltenbalg tritt diese Art von Verschleiß nicht auf, der sich mittelbar auf die Betriebsdauer des Kugelgelenks auswirkt. Zudem ist ohne einen Faltenbalg der absolute Rotationsdurchmesser der geknickten Kugelgelenkwelle in einer abgewinkelten Position reduziert, weil die Außenabmessungen aufgrund des fehlenden Faltenbalgs kleiner sind. Auch bietet die Fettschmierung gegenüber der Tropfenschmierung eine Art konstante Schmierung, deren Wartungsintervall um Faktoren zwischen fünf und zwanzig gegenüber der Tropfenschmierung reduziert ist. Je nach Einsatz muss die erfindungsgemäße Fettschmierung nämlich nur alle 20 Tage anstatt täglich erfolgen. Die Tropfenschmierung hat auch den Nachteil, dass durch das Öl als Schmiermittel Schmutz von außen mit dem Öl in die Lagerung transportiert wird. Die erfindungsgemäße Lösung hat den Vorteil, dass das Fett durch die Kanäle in das Zentrum des Kugelgelenks eingebracht werden kann und durch das Zuführen beziehungsweise Einpressen von neuem Fett in das Lager das im Lager befindliche alte Fett zusammen mit Abrieb und Verunreinigungen aus dem Kugelgelenk nach außen herausgepresst wird.

Vorteilhaft kann es hierzu auch sein, wenn die Nut einen Nutgrund aufweist und ein als Verbindungskanal ausgebildeter Kanal des Kanalsystems am Nutgrund mündet. Dadurch wird erreicht, dass das über die Kanäle zugeführte Fett direkt an die Gleitfläche zwischen der Nut und der Gelenknabe geführt wird.

Hinsichtlich einer einfachen Schmierung kann es vorteilhaft sein, wenn an der Kugeloberfläche ein Schmiernippel vorgesehen ist und ein als Zuführkanal ausgebildeter Kanal des Kanalsystems den Verbindungskanal mit dem Schmiernippel verbindet. Durch den Schmiernippel und den Zuführkanal wird eine zentrale Fettschmierung ermöglicht. Die möglichst geringe Anzahl an Kanälen gewährleistet eine möglichst geringe Schwächung der Gelenkkugel, weil dadurch so viel Material wie möglich an der Gelenkkugel verbleibt.

Vorteilhaft kann es auch sein, wenn alle Kanäle in radialer Richtung zur Kugeloberfläche angeordnet und im Kugelmittelpunkt miteinander verbunden sind. Dadurch wird eine einfache Herstellung der Gelenkkugel erreicht, weil die Kanäle rechtwinklig zu der Kugeloberfläche gebohrt oder gefräst werden können. Der Verbindungskanal verbindet somit zwei Positionen am Nutgrund, die bezüglich der Gelenkkugel gegenüberliegend angeordnet sind.

Hinsichtlich eines universellen Einsatzes kann es vorteilhafterweise vorgesehen sein, dass die Nut 360° (Grad) um die Gelenkkugel umläuft. Dadurch kann die Gelenkkugel sich relativ zu der Gelenknabe beliebig um 360° (Grad) drehen.

Hinsichtlich der Zugänglichkeit des Schmiernippels der Gelenkkugel kann es von besonderer Bedeutung für die vorliegende Erfindung sein, wenn die Verbindungskanäle in einer Ebene angeordnet sind und der Zuführkanal parallel oder um einen Winkel δ größer dem Wert Null angestellt zu der Ebene angeordnet ist. Eine zum Schnittpunkt der beiden Nuten hin orientierte Position des Schmiernippels kann zwecks Nachschmierung in Einbausituationen vorteilhaft sein, in denen das Kugelgelenk schwer zugänglich ist.

Ebenso kann es hinsichtlich der Zugänglichkeit des Schmiernippels der Gelenkkugel von Vorteil sein, wenn der Zuführkanal um einen Winkel β ungleich dem Wert 45 gegenüber dem Verbindungskanal angestellt ist.

Hinsichtlich der relativen Verläufe der Nuten und Kanäle ist vorgesehen, dass der Winkel α einen Wert von 90° (Grad) oder zwischen 45° (Grad) und 89° (Grad) und/oder der Winkel β einen Wert von 45° (Grad) oder zwischen 20° (Grad) und 44° (Grad) und/oder der Winkel δ einen Wert zwischen 5° (Grad) und 35° (Grad) aufweisen.

In Bezug auf eine Reduzierung der Schmierintervalle ist es vorteilhaft, dass im Nutgrund eine Vertiefung vorgesehen ist, die zumindest teilweise parallel zum Nutgrund um die Gelenkkugel umläuft und in der der Verbindungskanal mündet. Diese Vertiefung dient als Schmiermittelreservoir, welches beim Nachfüllen von neuem Fett automatisch gefüllt wird, bevor das Fett in die übrige Nut eindringt. Da sich die Vertiefung in Umfangsrichtung entlang des Nutgrunds erstreckt, wird eine bessere Verteilung des Schmiermittels entlang der Nut durch das Einpressen des Schmiermittels erreicht.

Zur besseren Orientierung der Schmiermittelversorgung ist es vorgesehen, dass die Vertiefung in Bezug zu einer Mündung des Verbindungskanals am Nutgrund in Umfangsrichtung um den Nutgrund versetzt angeordnet ist. Für die jeweilige Gelenknabe in gegenüberliegende Richtungen, weil die beiden Gelenknaben bezüglich der Gelenkkugel gegenüberliegend angeordnet sind.

Hinsichtlich einer besseren Lagerung kann es vorteilhaft sein, wenn der Nutgrund zwei plane und bezüglich der Gelenkkugel gegenüberliegende, parallel zueinander angeordnete Flächen aufweist, die zum Einführen in die Gelenknabe vorgesehen sind. Dadurch lässt sich eine Gelenknabe verwenden, deren Gabeln die Gelenkkugel mit einem Winkel von mehr als 180° (Grad) einschließen.

Alternativ zu den zentral verlaufenden Kanälen kann vorgesehen sein, dass ein als Verbindungskanal ausgebildeter Kanal des Kanalsystems an einer Nutflanke der Nut mündet. Je nach Drehrichtung ist zwischen einer Nutflanke und der Gelenknabe die meiste Reibung gegeben, sodass eine solche Geometrie für die Versorgung mit Schmiermittel direkt auf die Nutflanke vorteilhaft ist.

Weitere Vorteile und Einzelheiten der Erfindung sind in den Patentansprüchen und in der Beschreibung erläutert und in den Figuren dargestellt. Es zeigen:
- Figur 1: eine Draufsicht eines Kugelgelenks mit einer Gelenkkugel und zwei Gelenknaben;
- Figur 2: eine perspektivische Ansicht der Gelenkkugel;
- Figur 3: eine Draufsicht auf die Gelenkkugel parallel zu einer Nut gemäß Figur 1 ohne Gelenknaben;
- Figur 4: eine Schnittansicht A-A der Gelenkkugel gemäß Figur 3;
- Figur 5: eine Draufsicht auf die Gelenkkugel parallel zu zwei Nuten;
- Figur 6: eine Schnittansicht B-B der Gelenkkugel gemäß Figur 5;
- Figur 7: eine Schnittansicht C-C der Gelenkkugel gemäß Figur 5 und
- Figur 8: eine Schnittansicht der Gelenkkugel entsprechend Figur 7 mit einer Gelenknabe.

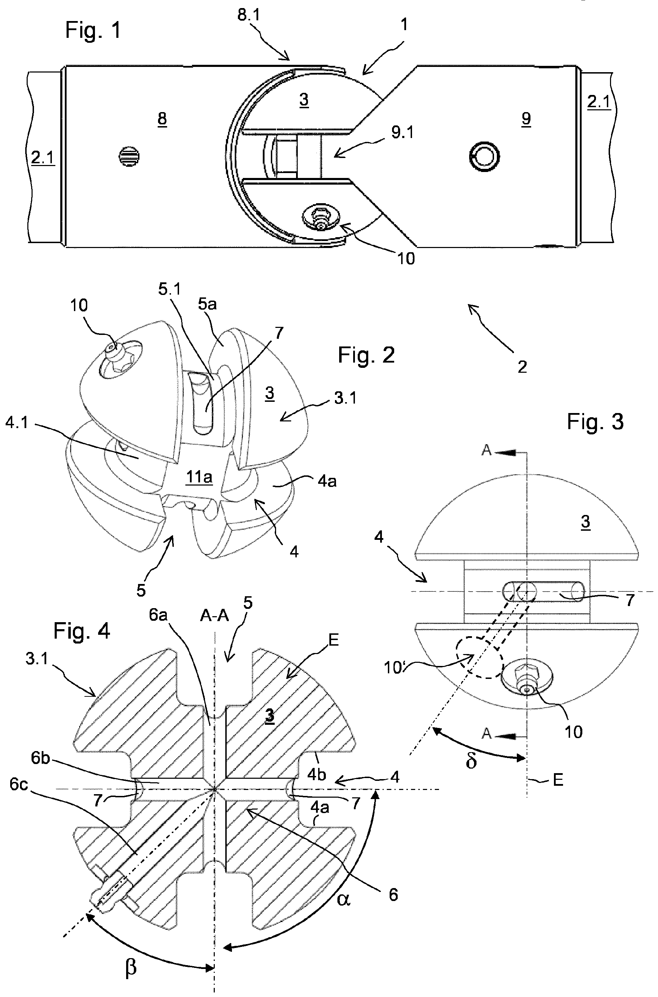

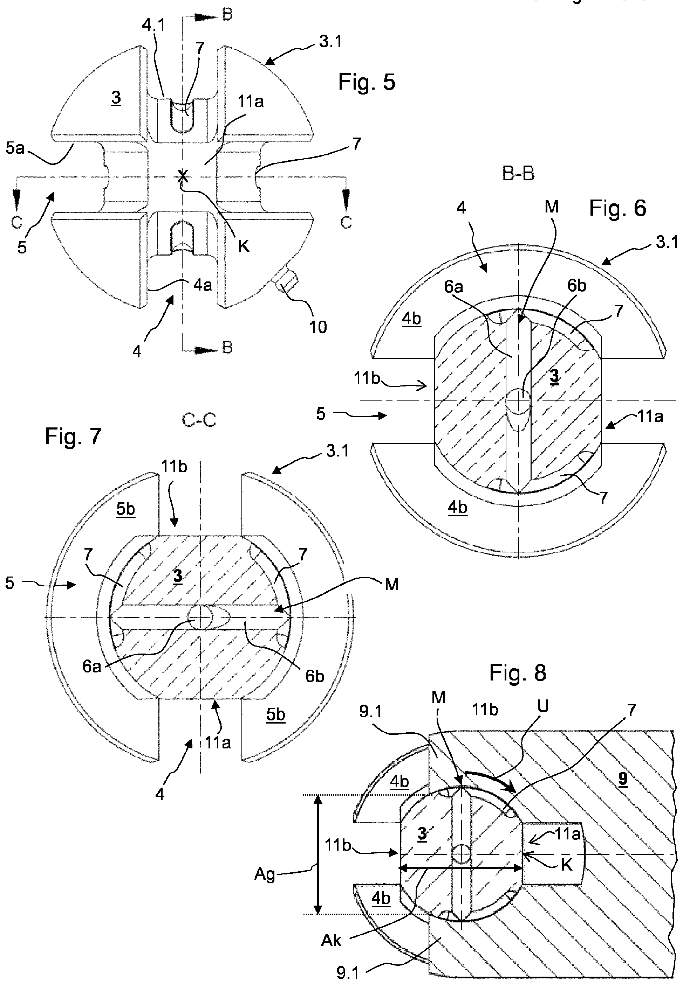

In Figur 1 sind eine Kugelgelenkwelle 2 mit einem zentralen Kugelgelenk 1 und zwei an das Kugelgelenk 1 anschließenden Wellen 2.1 dargestellt. Das Kugelgelenk 1 besteht aus einer Gelenkkugel 3 und zwei rechts und links in die Gelenkkugel 3 eingreifenden Gelenknaben 8, 9. Die Gelenknaben 8, 9 sind endseitig mit entsprechenden Gabeln 8.1, 9.1 ausgebildet, die in die Nuten eingeführt sind, was in Figur 8 detaillierter dargestellt ist.

Figur 2 zeigt eine erfindungsgemäße Gelenkkugel 3 mit ihrer äußeren Kugeloberfläche 3.1. In der Gelenkkugel 3 ist eine erste vollständig um die Gelenkkugel 3 umlaufende Nut 4 sowie eine zweite ebenfalls vollständig um die Gelenkkugel 3 umlaufende Nut 5 vorgesehen. Die zweite Nut 5 verläuft rechtwinklig zu der ersten Nut 4. Die jeweilige Nut 4, 5 bildet beidseitig der Nut 4, 5 rechtwinklig zur Kugeloberfläche 3.1 angeordnete parallele Nutflanken 4a/b, 5a/b. Wie in der Schnittdarstellung A-A in Figur 4 präziser dargestellt ist, sind in die Gelenkkugel 3 mehrere Kanäle 6a-6c eingebracht. Jeder der beiden Verbindungskanäle 6a, 6b verläuft in radialer Richtung diametral durch die Gelenkkugel 3 und durch den Kugelmittelpunkt von einer Seite der Kugel auf die andere. Über den jeweiligen Verbindungskanal 6a, 6b wird die Nut 4, 5 somit im Nutgrund 4.1, 5.1 verbunden, da der Verbindungskanal 6a, 6b am Nutgrund mündet. Die beiden Verbindungskanäle 6a, 6b verlaufen in einer Ebene E in einem Winkel α von 90° (Grad) zueinander. Ferner ist ein Zuführkanal 6c vorgesehen, der ebenfalls rechtwinklig zu der Kugeloberfläche 3.1 in radialer Richtung bis zum Kugelmittelpunkt verläuft. Der Zuführkanal 6c ist somit mit den beiden Verbindungskanälen 6a, 6b verbunden. Eingangsseitig ist am Zuführkanal 6c ein Schmiernippel 10 vorgesehen, über den ein pastöses Schmiermittel wie beispielsweise Schmierfett über den Zuführkanal 6c und die Verbindungskanäle 6a, 6b in die beiden Nuten eingebracht werden kann. Der Zuführkanal 6c ist in einem Winkel β von 45° (Grad) zu den Verbindungskanälen 6a, 6b angestellt. In dem Ausführungsbeispiel nach Figur 4 liegt der Zuführkanal 6c in der Ebene E, die durch die beiden Verbindungskanäle 6a, 6b aufgespannt wird. Für diese relative Position wird auf die jeweilige Mittelachse der Kanäle 6a-6c Bezug genommen.

In dem Ausführungsbeispiel gemäß Figur 3, die die Schnittführung A-A zeigt, ist der Zuführkanal 6c um einen Winkel δ von ungefähr 40° (Grad) gegenüber der Ebene E angestellt. Hierdurch kann eine in der Einbausituation der Kugelgelenkwelle 2 vorteilhafte Zugänglichkeit an den Schmiernippel 10 erreicht werden.

In den Figuren 2 bis 8 sind zudem Vertiefungen 7 am Nutgrund erkennbar, die als Reservoir für Schmiermittel dienen. Die Vertiefung 7 setzt sich ausgehend vom Verbindungskanal 6a, 6b in beide Umfangsrichtungen am Nutgrund fort und wird somit über den Verbindungskanal 6a, 6b mit Schmiermittel versorgt. Dadurch wird das Schmiermittel in Umfangsrichtung um die Gelenkkugel 3 am Nutgrund in beide Umfangsrichtungen verteilt. Figur 5 zeigt eine Ansicht auf die beiden sich in dem einen von zwei gegenüberliegenden Kreuzungspunkten K kreuzenden Nuten 4, 5. In der Nut 4 sind die beiden Vertiefungen 7 relativ zu einer Mündung M des Verbindungskanals 6a, 6b in Richtung einer Fläche 11a versetzt angeordnet, was auch in Figur 6 dargestellt ist. In der Nut 5 ist der Versatz entsprechend in die andere Richtung hin zur Fläche 11b vorgesehen, was in Figur 7 dargestellt ist. Die jeweilige Vertiefung 7 in den beiden Nuten 4, 5 ist wie in Figur 8 näher dargestellt relativ zu der Mündung M des Verbindungskanals 6a, 6b in eine mit einem Pfeil dargestellte Umfangsrichtung U versetzt angeordnet.

Die in Figur 8 im Schnitt dargestellte Gelenknabe 9 umschließt die Gelenkkugel 3 um mehr als 180° (Grad). Hierzu sind zwei Gabeln 9.1 vorgesehen, die an ihren Enden einen Abstand Ag aufweisen, der kleiner ist als der Durchmesser der Gelenkkugel 3 am Nutgrund. Damit die Gabel 9.1 auf die Gelenkkugel 3 aufgesteckt werden kann, sind zwei gegenüberliegende Flächen 11a/b in der jeweiligen Nut 4, 5 an den Kreuzungspunkten K der beiden Nuten vorgesehen. Der Abstand Ak der beiden parallelen Flächen 11a/b ist wenige hundertstel Millimeter kleiner als der Abstand Ag der Gabeln 9.1. Dadurch lässt sich die Gelenkkugel 3 in die Gelenknabe 9 einführen. Die gleiche Konstruktion ist für die Gelenknabe 8 und die nicht dargestellte Gabel 8.1 vorgesehen.

## Patentansprüche

1. Gelenkkugel (3) für ein Kugelgelenk (1) einer Kugelgelenkwelle (2), wobei die Gelenkkugel (3) eine äußere Kugeloberfläche (3.1) sowie eine erste Nut (4) und eine zweite Nut (5) zum Einsetzen von jeweils einer separaten Gelenknabe (8, 9) aufweist und beide Nuten (4, 5) um einen Winkel α zueinander angestellt und zumindest teilweise um die Gelenkkugel (3) umlaufend ausgebildet sind,
**dadurch gekennzeichnet,**
**dass** in der Gelenkkugel (3) ein Kanalsystem (6) für Schmiermittel mit mehreren Kanälen (6a-6c) vorgesehen ist und das Kanalsystem (6) die Kugeloberfläche (3.1) mit der Nut (4, 5) verbindet.

2. Gelenkkugel (3) nach Anspruch 1,
**dadurch gekennzeichnet,**
**dass** die Nut (4, 5) einen Nutgrund (4.1, 5.1) aufweist und ein als Verbindungskanal (6a, 6b) ausgebildeter Kanal des Kanalsystems (6) am Nutgrund (4.1, 5.1) mündet.

3. Gelenkkugel (3) nach einem der Ansprüche 1 oder 2,
**dadurch gekennzeichnet,**
**dass** an der Kugeloberfläche (3.1) ein Schmiernippel (10) vorgesehen ist und ein als Zuführkanal (6c) ausgebildeter Kanal des Kanalsystems (6) den Verbindungskanal (6a, 6b) mit dem Schmiernippel (10) verbindet.

4. Gelenkkugel (3) nach einem der vorhergehenden Ansprüche,
**dadurch gekennzeichnet,**
**dass** alle Kanäle (6a-6c) in radialer Richtung zur Kugeloberfläche (3.1) angeordnet und im Kugelmittelpunkt miteinander verbunden sind.

5. Gelenkkugel (3) nach einem der vorhergehenden Ansprüche,
**dadurch gekennzeichnet,**
**dass** die Nut (4, 5) 360° (Grad) um die Gelenkkugel (3) umläuft.

6. Gelenkkugel (3) nach einem der Ansprüche 2 bis 5,
**dadurch gekennzeichnet,**
**dass** die Verbindungskanäle (6a, 6b) in einer Ebene (E) angeordnet sind und der Zuführkanal (6c) parallel oder um einen Winkel δ angestellt zu der Ebene (E) angeordnet ist.

7. Gelenkkugel (3) nach einem der Ansprüche 3 bis 6,
**dadurch gekennzeichnet,**
**dass** der Zuführkanal (6c) um einen Winkel β gegenüber dem Verbindungskanal (6a, 6b) angestellt ist.

8. Gelenkkugel (3) nach einem der vorhergehenden Ansprüche,
**dadurch gekennzeichnet,**
**dass** der Winkel α einen Wert von 90° (Grad) oder zwischen 45° (Grad) und 89° (Grad) und/oder der Winkel β einen Wert von 45° (Grad) oder zwischen 20° (Grad) und 44° (Grad) und/oder der Winkel δ einen Wert zwischen 5° (Grad) und 35° (Grad) aufweisen.

9. Gelenkkugel (3) nach einem der Ansprüche 2 bis 8,
**dadurch gekennzeichnet,**
**dass** im Nutgrund (4.1, 5.1) eine Vertiefung (7) vorgesehen ist, die zumindest teilweise parallel zum Nutgrund (4.1, 5.1) um die Gelenkkugel (3) umläuft und in der der Verbindungskanal (6a, 6b) mündet.

10. Gelenkkugel (3) nach Anspruch 9,
**dadurch gekennzeichnet,**
**dass** die Vertiefung (7) in Bezug zu einer Mündung (M) des Verbindungskanals (6a, 6b) am Nutgrund (4.1, 5.1) in Umfangsrichtung (U) um den Nutgrund (4.1, 5.1) versetzt angeordnet ist.

11. Gelenkkugel (3) nach einem der Ansprüche 2 bis 10,
**dadurch gekennzeichnet,**
**dass** der Nutgrund (4.1, 5.1) zwei plane und bezüglich der Gelenkkugel (3) gegenüberliegende, parallel zueinander angeordnete Flächen (11a, 11b) aufweist, die zum Einführen in die Gelenknabe (8, 9) vorgesehen sind.

12. Kugelgelenk (1) und/oder Kugelgelenkwelle (2) mit zumindest einer Gelenkkugel (3) nach einem der vorhergehenden Ansprüche.

13. Verwendung einer Gelenkkugel (3) nach einem der Ansprüche 1 bis 11, zum Schmieren eines Kugelgelenks (1) einer Kugelgelenkwelle (2).

14. System bestehend aus einer Gelenkkugel (3) nach einem der Ansprüche 1 bis 11 oder einem Kugelgelenk (1) oder einer Kugelgelenkwelle (2) nach Anspruch 12 und einer Antriebseinheit für ein Aggregat

15. Verfahren zum Schmieren eines Kugelgelenks (1) einer Kugelgelenkwelle (2) mit einer Gelenkkugel (3),
**dadurch gekennzeichnet,**
**dass** in der Gelenkkugel (3) Kanäle (6a-6c) in radialer Richtung zum Mittelpunkt der Gelenkkugel (3) vorgesehen sind und über die Kanäle (6a-6c) Schmiermittel von der Kugeloberfläche (3.1) durch die Gelenkkugel (3) in die Nuten (4, 5) der Gelenkkugel (3) geführt wird, in denen eine Gelenknabe (8, 9) angeordnet werden kann.

## Claims

1. A joint ball (3) for a ball joint (1) of a ball-jointed shaft (2), wherein the joint ball (3) has an outer ball surface (3.1), as well as a first groove (4) and a second groove (5) for respectively inserting a separate joint hub (8, 9), and wherein both grooves (4, 5) are angled relative to one another by an angle α and realized so as to at least partially extend around the joint ball (3),
**characterized in**
**that** a channel system (6) for lubricant with multiple channels (6a-6c) is provided in the joint ball (3), and in that the channel system (6) connects the ball surface (3.1) to the groove (4, 5).

2. The joint ball (3) according to claim 1,
**characterized in**
**that** the groove (4, 5) has a groove base (4.1, 5.1), and in that a channel of the channel system (6), which is realized in the form of a connecting channel (6a, 6b), opens out into the groove base (4.1, 5.1).

3. The joint ball (3) according to one of claims 1 or 2,
**characterized in**
**that** a lubricating nipple (10) is provided on the ball surface (3.1), and in that a channel of the channel system (6), which is realized in the form of a feed channel (6c), connects the connecting channel (6a, 6b) to the lubricating nipple (10).

4. The joint ball (3) according to one of the preceding claims,
**characterized in**
**that** all channels (6a-6c) are arranged in the radial direction to the ball surface (3.1) and connected to one another in the center of the ball.

5. The joint ball (3) according to one of the preceding claims,
**characterized in**
**that** the groove (4, 5) extends around the joint ball (3) over an angle of 360° (degrees).

6. The joint ball (3) according to one of claims 2 to 5,
**characterized in**
**that** the connecting channels (6a, 6b) are arranged in a plane (E), and in that the feed channel (6c) is arranged parallel to the plane (E) or angled relative to said plane by an angle δ.

7. The joint ball (3) according to one of claims 3 to 6,
**characterized in**
**that** the feed channel (6c) is angled relative to the connecting channel (6a, 6b) by an angle β.

8. The joint ball (3) according to one of the preceding claims,
**characterized in**
**that** the angle α has a value of 90° (degrees) or between 45° (degrees) and 89° (degrees) and/or the angle β has a value of 45° (degrees) or between 20° (degrees) and 44° (degrees) and/or the angle δ has a value between 5° (degrees) and 35° (degrees).

9. The joint ball (3) according to one of claims 2 to 8,
**characterized in**
**that** a depression (7) is provided in the groove base (4.1, 5.1), wherein said depression extends around the joint ball (3) at least partially parallel to the groove base (4.1, 5.1) and the connecting channel (6a, 6b) opens out into the depression.

10. The joint ball (3) according to claim 9,
**characterized in**
**that** the depression (7) is arranged offset in relation to a mouth (M) of the connecting channel (6a, 6b) on the groove base (4.1, 5.1) in the circumferential direction (U) around the groove base (4.1, 5.1).

11. The joint ball (3) according to one of claims 2 to 10,
**characterized in**
**that** the groove base (4.1, 5.1) has two planar surfaces (11a, 11b), which lie opposite of one another with respect to the joint ball (3) and are arranged parallel to one another, wherein said planar surfaces are provided for the insertion into the joint hub (8, 9) .

12. A ball joint (1) and/or a ball-jointed shaft (2) with at least one joint ball (3) according to one of the preceding claims.

13. Use of a joint ball (3) according to one of claims 1 to 11 for lubricating a ball joint (1) of a ball-jointed shaft (2).

14. A system consisting of a joint ball (3) according to one of claims 1 to 11 or a ball joint (1) or a ball-jointed shaft (2) according to claim 12 and a drive unit for an assembly.

15. A method for lubricating a ball joint (1) of a ball-jointed shaft (2) with a joint ball (3),
**characterized in**
**that** channels (6a-6c) are provided in the joint ball (3) in the radial direction toward the center of the joint ball (3), and in that lubricant is conveyed through the joint ball (3) from the ball surface (3.1) into the grooves (4, 5) of the joint ball (3) via the channels (6a-6c), wherein a joint hub (8, 9) can be arranged in the grooves of the joint ball.

## Revendications

1. Rotule d'articulation (3) pour une articulation à rotule (1) d'un arbre d'articulation à rotule (2), sachant que la rotule d'articulation (3) comporte une surface de rotule extérieure (3.1) ainsi qu'une première rainure (4) et une deuxième rainure (5) pour insérer à chaque fois un moyeu d'articulation séparé (8, 9) et les deux rainures (4, 5) sont placées à un angle α l'une par rapport à l'autre et sont constituées au moins en partie passant autour de la rotule d'articulation (3),
**caractérisée en ce que**
dans la rotule d'articulation (3) est prévu un système de conduits (6) pour du lubrifiant avec plusieurs conduits (6a-6c) et **en ce que** le système de conduits (6) relie la surface de rotule (3.1) à la rainure (4, 5) .

2. Rotule d'articulation (3) selon la revendication 1,
**caractérisée en ce que**
la rainure (4, 5) comporte un fond de rainure (4.1, 5.1) et un conduit du système de conduits (6) constitué sous la forme d'un conduit de liaison (6a, 6b) débouche au fond de rainure (4.1, 5.1).

3. Rotule d'articulation (3) selon l'une quelconque des revendications 1 ou 2,
**caractérisée en ce qu'**
un graisseur (10) est prévu sur la surface de rotule (3.1) et un conduit du système de conduits (6) constitué sous la forme d'un conduit d'alimentation (6c) relie le conduit de liaison (6a, 6b) au graisseur (10).

4. Rotule d'articulation (3) selon l'une quelconque des revendications précédentes,
**caractérisée en ce que**
tous les conduits (6a-6c) sont disposés en direction radiale vers la surface de rotule (3.1) et sont reliés entre eux au centre de la rotule.

5. Rotule d'articulation (3) selon l'une quelconque des revendications précédentes,
**caractérisée en ce que** les
la rainure (4, 5) passe en périphérie à 360° (degrés) autour de la rotule d'articulation (3).

6. Rotule d'articulation (3) selon l'une quelconque des revendications 2 à 5,
**caractérisée en ce que**
les conduits de liaison (6a, 6b) sont disposés dans un plan (E) et le conduit d'alimentation (6c) est disposé parallèlement ou placé à un angle δ par rapport au plan (E) .

7. Rotule d'articulation (3) selon l'une quelconque des revendications 3 à 6,
**caractérisée en ce que**
le conduit d'alimentation (6c) est placé à un angle β par rapport au conduit de liaison (6a, 6b).

8. Rotule d'articulation (3) selon l'une quelconque des revendications précédentes,
**caractérisée en ce que**
l'angle α comporte une valeur de 90° (degrés) ou se situant entre 45° (degrés) et 89° (degrés) et/ou l'angle β comporte une valeur de 45° (degrés) ou se situant entre 20° (degrés) et 44° (degrés) et/ou l'angle δ comporte une valeur se situant entre 5° (degrés) et 35° (degrés).

9. Rotule d'articulation (3) selon l'une quelconque des revendications 2 à 8,
**caractérisée en ce qu'**
une cavité (7) est prévue dans le fond de rainure (4.1, 5.1), qui passe en périphérie au moins en partie parallèlement au fond de rainure (4.1, 5.1) autour de la rotule d'articulation (3) et dans laquelle débouche le conduit de liaison (6a, 6b).

10. Rotule d'articulation (3) selon la revendication 9,
**caractérisée en ce que**
la cavité (7) est disposée décalée par rapport à une embouchure (M) du conduit de liaison (6a, 6b) au fond de rainure (4.1, 5.1) en direction périphérique (U) autour du fond de rainure (4.1, 5.1).

11. Rotule d'articulation (3) selon l'une quelconque des revendications 2 à 10,
**caractérisée en ce que**
le fond de rainure (4.1, 5.1) comporte deux surfaces (11a, 11b) planes et opposées par rapport à la rotule d'articulation (3), parallèles l'une à l'autre, qui sont prévues pour introduction dans le moyeu d'articulation (8, 9).

12. Articulation de rotule (1) et/ou arbre d'articulation de rotule (2) avec au moins une rotule d'articulation (3) selon l'une quelconque des revendications précédentes.

13. Utilisation d'une rotule d'articulation (3) selon l'une quelconque des revendications 1 à 11 pour lubrifier une articulation de rotule (1) d'un arbre d'articulation de rotule (2).

14. Système composé d'une rotule d'articulation (3) selon l'une quelconque des revendications 1 à 11 ou d'une articulation de rotule (1) ou d'un arbre d'articulation de rotule (2) selon la revendication 12 et d'une unité d'entraînement pour un groupe.

15. Procédé de lubrification d'une articulation de rotule (1) d'un arbre d'articulation de rotule (2) avec une rotule d'articulation (3),
**caractérisé en ce que**
dans la rotule d'articulation (3) des conduits (6a-6c) sont prévus en direction radiale vers le centre de la rotule d'articulation (3) et du lubrifiant est passé par les conduits (6a-6c) de la surface de rotule (3.1) par la rotule d'articulation (3) dans les rainures (4, 5) de la rotule d'articulation (3) dans lesquelles peut être disposé un moyeu d'articulation (8, 9).
